(19) Europäisches Patentamt
European Patent Office
Office européen des brevets

(11) Publication number: **0 136 185 A2**

# (12) EUROPEAN PATENT APPLICATION

(21) Application number: **84306635.8**

(22) Date of filing: **28.09.84**

(51) Int. Cl.[4]: **C 10 M 133/56**, C 08 F 8/42, C 08 F 8/44, C 07 F 5/02

(30) Priority: **29.09.83 US 537098**

(43) Date of publication of application: **03.04.85 Bulletin 85/14**

(84) Designated Contracting States: **BE DE FR GB IT NL**

(71) Applicant: **EDWIN COOPER, INC., 451 Florida Boulevard, Baton Rouge Louisiana 70801 (US)**

(72) Inventor: **Malec, Robert Edward, 23 Woodcrest Drive, Richmond Heights Missouri 63124 (US)**
Inventor: **Papay, Andrew George, 897 Rustic Manor Circle, Manchester Missouri 63011 (US)**

(74) Representative: **Bizley, Richard Edward et al, BOULT, WADE & TENNANT 27 Furnival Street, London EC4A 1PQ (GB)**

(54) **Process for boronating dispersants, boronated dispersants and fluid compositions containing the same.**

(57) Boronation of hydrocarbyl-substituted succinimide dispersants (e.g. for lubricating oils) may be conducted by adding a lower alcohol solution of a boronating agent to the dispersant and distilling out the alcohol. The product is substantially haze-free and is compatible with fluoroelastomers such as are often used in heavy duty clutch plate facings.

EP 0 136 185 A2

# PROCESS FOR BORONATING DISPERSANTS, BORONATED DISPERSANTS AND FLUID COMPOSITIONS CONTAINING THE SAME

This invention is concerned with the production of boronated dispersants.

Alkenyl succinimides have been used for many years as dispersants in lubricating oil compositions. Typical succinimide dispersants are described in U.S. 3,178,892; U.S. 3,219,666 and U.S. 3,272,746. In some compositions the succinimide dispersants are boronated to improve certain properties especially to reduce corrosion. This can be accomplished by adding a boronating agent to the succinimide dispersant, heating the mixture and then filtering to remove any residual boronating agent. Such a procedure is described in U.S. 3,087,936 and U.S. 3,254,025.

Although such prior art procedures are successful in introducing boron into the succinimide they tend to make a somewhat hazy product. This detracts from the commercial acceptability of the product. Accordingly, a need exists for a process that will introduce boron into the product while still giving a bright clear additive.

According to the present invention a process is provided for producing a substantially haze-free hydrocarbyl-substituted succinimide dispersant containing an effective amount of boron by adding a lower

alcohol solution of a boronating agent to the succinimide dispersant and distilling out the alcohol.

A preferred embodiment of the present invention is a process for boronating a hydrocarbyl-substituted succinimide or succinamide dispersant said process comprising (a) adding a lower alcohol solution of boric acid to said hydrocarbyl-substituted succinimide dispersant and (b) distilling said lower alcohol from the resultant reaction mixture.

Hydrocarbyl-substituted succinimide dispersants which can be used in the process are well known. They are readily made by first reacting an olefinically unsaturated hydrocarbon of the desired molecular weight with maleic anhydride to form a hydrocarbyl-substituted succinic anhydride. Reaction temperatures of 100-250°C are used. With higher boiling olefinically-unsaturated hydrocarbons good results are obtained at 200-250°C. This reaction can be promoted by the addition of chlorine. Typical olefins include cracked wax olefins, linear alpha olefins, branched chain alpha olefins, polymers and copolymers of lower olefins. These include polymers of ethylene, propylene, isobutylene, 1-hexene, 1-decene and the like. Useful copolymers are ethylene - propylene copolymers, ethylene - isobutylene copolymers, propylene - isobutylene copolymers, ethylene - 1-decene copolymers and the like.

Hydrocarbyl substituents have also been made from olefin terpolymers. Very useful products have been made from ethylene - $C_{3-12}$ alpha olefin - $C_{5-12}$ non conjugated diene terpolymers;such as ethylene - propylene - 1,4-hexadiene terpolymer; ethylene - propylene - 1,5-cyclooctadiene terpolymer; ethylene - propylene - norbornene terpolymers and the like.

Of the foregoing by far the most useful hydrocarbyl substituents are derived from butene polymers especially polymers of isobutylene.

The molecular weight of the hydrocarbyl substituent can vary over a wide range. In order to have dispersant properties the hydrocarbyl group should have a molecular weight of at least 500. Although there is no critical upper limit, a preferred range is 500-500,000 number average molecular weight. The more preferred dispersants have an average molecular weight of 700-5,000 and most preferably 900-3,000.

Hydrocarbyl-substituted succinimides and succinamides are made by reaction of the desired hydrocarbyl-substituted succinic anhydride with an amine having at least one reactive hydrogen atom bonded to an amine nitrogen atom. Examples of these are methyl amine, dimethyl amine, n-butyl amine, di-(n-dodecyl) amine, N-(aminoethyl) piperidine, piperazine, N-(3-aminopropyl) piperazine and the like.

Preferably the amine has at least one reactive primary amine group capable of reacting to form the preferred succinimides. Examples of such primary amines are n-octyl amine, N,N-dimethyl-1,3-propane diamine, N-(3-aminopropyl) piperazine, 1,6-hexane diamine, and the like.

Hydroxyalkyl amines are also used to make succinimide - succinamide dispersants which contain some ester groups. These amines include ethanol amine, diethanol amine, 2-hydroxypropyl amine, N-hydroxyethyl ethylenediamine and the like. Such hydroxyalkyl amines can be made by reacting a lower alkylene oxide, such as ethylene oxide, propylene oxide or butylene oxide with ammonia or a primary or secondary amine such as ethylene diamine, diethylene triamine, triethylene tetramine, tetraethylene pentamine and the like.

A more preferred class of primary amines used to make the succinimide, succinamide or mixtures thereof are the polyalkylene amines. These are polyamines and mixtures of polyamines which have the general formula

$$H_2N \leftarrow R - NH \rightarrow_n H$$

wherein R is a divalent aliphatic hydrocarbon group having 2-4 carbon atoms and n is an integer from 1-10 including mixtures of such polyalkylene amines.

In a highly preferred embodiment the polyalkylene amine is a polyethyleneamine containing about 2-6 ethyleneamine units. These are represented by the above formula in which R is the group - $CH_2CH_2$ - and n has a value of 2-6.

The amine used to make the succinimide, succinamide or mixture thereof need not be all amine. Sometimes it has proven beneficial to include a mono or poly-hydroxyalcohol in the reaction. Such alcohols can be reacted concurrently with the amine or the alcohol and amine may be reacted sequentially. Useful alcohols are methanol, ethanol, n-dodecanol, 2-ethyl hexanol, ethylene glycol, propylene glycol, diethylene glycol, 2-ethoxy ethanol, trimethylol propane, pentaerythritol, dipentaerythritol and the like.

Useful amine - alcohol products that can be boronated according to the present process are described in U.S. 3,184,474; U.S. 3,576,743; U.S. 3,632,511; U.S. 3,804,763; U.S. 3,836,471; U.S. 3,936,480; U.S. 3,948,800; U.S. 3,950,341; U.S. 3,957,854; U.S. 3,957,855; U.S. 3,991,098; U.S. 4,071,548 and U.S. 4,173,540.

The reaction between the hydrocarbyl-substituted succinic anhydride and the amine can be carried out by mixing the components and heating the mixture to a temperature high enough to cause a reaction to occur but

not so high as to cause decomposition of the reactants or products or the anhydride may be heated to reaction temperature and the amine added over an extended period. A useful temperature is 100-250°C. Best results are obtained by conducting the reaction at a temperature high enough to distill out water formed in the reaction.

Boronation according to the present process is carried out by adding a solution or slurry of a boronating agent in a lower alcohol to the succinimide - succinamide dispersant and heating the mixture while distilling out the alcohol solvent. Suitable boronating agents are described in the patent literature such as those in U.S 3,087,936. The most important boronating agents are the boron acids. The most preferred boronating agent is ortho boric acid, $H_3BO_3$.

Useful alcohols include any of the lower alcohols which will dissolve at least some boric acid and can be subsequently distilled from the reaction mixture without decomposing the product. Such alcohols include methanol, ethanol, isopropanol, isobutanol, n-butanol, sec-butanol, n-propanol; dihydric alcohols such as ethylene glycol and propylene glycol; ether alcohols such as 2-methoxyethanol, 2-ethoxyethanol, 2-methoxy propanol, and the like.

The preferred alcohols are the lower aliphatic monohydric alcohols containing 1 to about 4 carbon atoms, more preferably 1 to about 3 carbon atoms. The most preferred alcohol is methanol.

The amount of boric acid mixed with the alcohol should be an amount adequate to provide the desired amount of boron in the boronated product. Good results have been achieved using 0.1-10 grams of boric acid per 100 grams of hydrocarbyl-substituted succinimide, succinamide or mixture thereof excluding any diluent oil that is generally present.

The ratio of boric acid to alcohol can vary over a wide range. All of the boric acid need not dissolve in the alcohol although it is preferably all or substantially all in solution. A useful range in which to work is 15 to 35 grams of boric acid per 100 grams of alcohol. A preferred mode of operation is to use a saturated alcohol solution. When using methanol and ortho-boric acid the preferred concentration is 25 to 30 grams of ortho boric acid per 100 grams of methanol.

Mixtures of alcohols can be used with good results. Likewise the alcohol need not be anhydrous but can contain water. Preferably the water content of the alcohol does not exceed about 10 wt%.

The boronation process is carried out by adding the alcohol containing boric acid to the hydrocarbyl-substituted succinimide, succinamide or mixture thereof and then heating the mixture at a temperature high enough to distill out the alcohol. Alternatively, the alcohol containing the boric acid can be added to the heated hydrocarbyl-substituted succinimide, succinamide or mixture thereof over an extended period while distilling out the alcohol solvent.

The following Examples serve to show the manner in which the process is carried out:

## EXAMPLE 1

This Example shows how to make a typical hydrocarbyl-substituted succinimide dispersant which can be effectively boronated by the present process.

In a reaction vessel was placed 568 g of a poly-isobutenyl succinic anhydride (PIBSA) (0.516 mole). This was heated to 175°C under vacuum to remove residual volatile material. Then 51.6 grams (0.287 moles) of a polyethylene amine mixture having an average composition of tetraethylenepentamine was added at 175°C over a five minute period. Heating at 175°C was continued for three hours while distilling out water formed in the reaction. An 88 g. sample was removed for analysis and the remainder was diluted with 257 g. of diluent oil to

give 771 g. of a 67% active polyisobutenyl succinimide of a polyethyleneamine. Analysis gave:

| | |
|---|---|
| Amine No. | 0.82 |
| Acid No. | 0.02 |
| Viscosity (100°C) | 163.7 cs. |

EXAMPLE 2

The following shows the boronation of the succinimide of Example 1.

In a reaction vessel was placed 300 g. of the polyisobutenyl succinimide of Example 1. This was heated to 85°C and a solution of 25 g. ortho boric acid in 100 g. methanol was added dropwise over a one hour period at 85-95°C while distilling off methanol. Heating was continued for one hour at 95-105°C and then under vacuum (approximately 50 mm Hg absol.) for 2.5 hours at 100-110°C. The reaction mixture was then gradually heated to 175°C. A total of 116 g. of distillate was recovered. The product was filtered through diatomaceous earth. It gave the following analysis:

| | |
|---|---|
| Viscosity at 100°C | 287.5 cs |
| Amine No. | 0.73 |
| Nitrogen | 1.87 wt% |
| Boron | 1.16 wt% |
| NTU[1] | 8.5 |

[1] Nephelometer Turbidity Units.

EXAMPLE 3

In a reaction vessel was placed 1650 g. (1.50 moles) of PIBSA and heated under vacuum (26 in Hg) to 175°C. Then 157.5 g. (0.8333 mole) of a polyethylene amine mixture having an average composition of tetraethylenepentamine was added at 175°C over a one hour period. Heating at 175°C was continued for three hours while distilling out the water formed in the reaction. The product (1807g.) was diluted with 1085 g. of diluent oil to give 2892g. of a 62.5% active polyisobutenyl succinimide of a polyethyleneamine. The product analyzed:

| | |
|---|---|
| Nitrogen | 1.97% |
| Amine No. | 0.85 |
| Acid No. | 0.04 |
| Viscosity (100°C) | 142 cs |
| NTU | 8.1 |

In a reaction vessel was placed 300 g. of the above polyisobutenyl succinimide. This was heated to 85°C under nitrogen while stirring. A solution of 35 g. ortho boric acid in 145 g. of methanol was added dropwise at 70-88°C over a 65 minute period while allowing methanol to distill out. The mixture was then heated further and stirred at 96-102°C for an hour. Vacuum (28 inches Hg vac) was applied while heating gradually to 170°C over a 90 minute period. Heat was continued at 170-172°C for one hour under vacuum and the product then filtered. Analysis was as follows:

| | |
|---|---|
| Viscosity (100°C) | 316 |
| Total Base No. | 40.4 |
| Amine No. | 0.72 |
| Acid No. | 0.80 |
| Boron | 1.23 wt% |
| Nitrogen | 1.88 wt% |
| NTU | 10.3 |

EXAMPLE 4

A polyisobutenyl succinimide of a commercial polyethyleneamine having an average composition corresponding to tetraethylene pentamine was made by heating 984 g. (0.6 mole) of PIBSA and 63 g. (0.333 mole) polyethylene amine at 175°C under vacuum while distilling out water. The product was diluted with 519 g. No. 5 process oil giving a 66 wt% active additive analyzing as follows:

| | |
|---|---|
| Amine No. | 0.60 |
| Viscosity (100°C) | 218 cs |
| Nitrogen | 1.37 wt% |
| NTU | 9.4 |

In a second reaction vessel was placed 300 g. of the above succinimide dispersant. This was stirred under nitrogen and heated to 85°C. A solution of 25 g. ortho boric acid in 100 g. methanol was added dropwise over an hour at 85-95°C while distilling off methanol. Heating was continued one hour at 95-105°C and then under vacuum at 100-110°C for 2.5 hours. Heating was continued for an additional hour while raising temperature to 175°C. The resultant product was filtered through diatomaceous earth. The product analyzed:

| | |
|---|---|
| Amine No. | 0.49 |
| Acid No. | 0.22 |
| Viscosity (100°C) | 420.9 cs |
| Nitrogen | 1.34 wt% |
| Boron | 1.04 wt% |
| NTU | 6.0 |

EXAMPLE 5

The following Example is for comparative purposes to show the results obtained using a water solution of boric acid instead of a methanol solution.

A polyisobutenyl succinimide was made by reacting 198 g. (0.18 mole) of PIBSA with 18.9 g. (0.10 mole) commercial tetraethylenepentamine mixture. The amine was added to the PIBSA under nitrogen at 170°C. The mixture was stirred at 176°C for two hours under vacuum (26 inches Hg) while distilling out water. It was then diluted with 107 g. No. 5 process oil to give a 66% active concentrate.

The product was then stirred at 100°C while adding a solution of 25 g. ortho boric acid in 117g. water dropwise at 90°C. The mixture was then stirred at 100°C for two hours under vacuum (26-28 inches Hg) while distilling out water. The product was then heated to 175°C over a one hour period under vacuum and then filtered through filter acid. The product analyized as follows:

| | |
|---|---|
| Amine No. | 0.71 |
| Acid No. | 0.88 |
| Viscosity (100°C) | 315 |
| Nitrogen | 1.90 wt% |
| Boron | 1.29 wt% |
| NTU | 430. |

In order to be commercially successful a boronated product should be clear. Suspended boric acid particulate will impart a haze to the product. The degree of haze is measured in Nephelometer Turbidity Units (NTU). A low value indicates a more clear, non-turbid product. The values obtained in the examples were as follows:

| Example | NTU |
|---|---|
| 2 | 8.5 |
| 3 | 10.3 |
| 4 | 13.0 |
| 5 | 430.0 |

Examples 2, 3 and 4 were made using the process of this invention. Example 5 was made using a different process in which the boric acid was added as a water solution rather than as an alcohol solution. It can be seen that the process of the present invention gives a product that is far superior to the product obtained using an aqueous boric acid solution. An NTU value of 30 or less, e.g. less than 25 or less than 20, is preferred in this invention.

Another very important property of the additives made by the present process is their compatability with fluoroelastomers (e.g. "Viton" brand by E.I. duPont de Nemours Co., reg. trademark). Such elastomers are used

in the clutch plate facing of some heavy duty power equipment utilizing a wet clutch and in certain engine seals. Contact with oil containing certain additives can degrade the elastomer. Degradation is measured in a test in which a test specimen is immersed in a candidate oil for ten days at 150°C. Elongation of the elastomer prior to breaking is measured before and after the ten day immersion. Test criterion is the percent decrease in elongation of a standard fluoroelastomer specimen (Viton, reg. trademark) supplied by Caterpillar Tractor Company for use in Oil Test No. TO-3. A reduction in elongation of 20% or less is considered acceptable. The following table shows the test results a nonboronated succinimide dispersant and with boronated succinimides:

| Test Additive* | Percent Elongation |
|---|---|
| Example 4 before boron | 41 |
| Example 4 after boron | 13 |
| Example 2 | 21 |
| Example 3 | 17 |
| Example 5 | 19 |

*Evaluated at 4.4 wt% in a finished motor oil.

As the above results show the boronated succinimide dispersants made by the process of this invention are compatible with fluoroelastomers used in clutch plates and oil seals. Accordingly, another embodiment of this invention is a boronated succinimide dispersant made by the process comprising (a) adding a

lower alcohol solution of boric acid to the hydrocarbyl-substituted succinimide dispersant and (b) distilling the lower alcohol from the resultant reaction mixture said boronated dispersant having a boron content of 0.1-2.0 weight percent boron, an NTU value of 20 or lower and which is compatible with fluoroelastomers as measured by the Caterpillar Oil Test Number TO-3.

The additives can be used in mineral oil or in synthetic oils of viscosity suitable for use in the crankcase of an internal combustion engine. Crankcase lubricating oils have a viscosity up to about 80 SUS at 210°F. (0.56 $m^2$/hr at 98.9°C.).

Crankcase lubricating oils of the present invention have a viscosity up to about SAE 50. Sometimes such motor oils are given a classification at both 0° and 210°F. (17.8 and 98.9°C.), such as SAE 10W 5W 30.

Mineral oils include those of suitable viscosity refined from crude oil from all sources including Gulfcoast, midcontinent, Pennsylvania, California, Mideast, North Sea, Alaska and the like. Various standard refinery operations can be used in processing the mineral oil.

Synthetic oil includes both hydrocarbon synthetic oil and synthetic esters. Useful synthetic hydrocarbon oils include liquid polymers of α-olefins

having the proper viscosity. Especially useful are the hydrogenated liquid oligomers of $C_{6-12}$ α-olefins such as 1-decene trimer. Likewise, alkylbenzenes of proper viscosity can be used, such as didodecylbenzene.

Useful synthetic esters include the esters of both monocarboxylic acid and polycarboxylic acid as well as monohydroxy alkanols and polyols. Typical examples are didodecyl adipate, trimethylol propane tripelargonate, pentaerythritol tetracaproate, di-(2-ethylhexyl)adipate, dilauryl sebacate and the like. Complex esters prepared from mixtures of mono- and dicarboxylic acid and mono- and polyhydroxyl alkanols can also be used.

Blends of mineral oil with synthetic oil are particularly useful. For example, blends of 10-25 weight percent hydrogenated 1-decene trimer with 75-90 weight percent 150 SUS (100°F.) (0.1152 meters$^2$/hr at 37.8$^o$C.) mineral oil results in an excellent lubricant. Likewise, blends of about 15-25 weight percent di-(2-ethylhexyl)adipate with mineral oil of proper viscosity results in a superior lubricating oil. Also blends of synthetic hydrocarbon oil with synthetic esters can be used. Blends of mineral oil with synthetic oil are especially useful when preparing low viscosity oil (e.g. SAE 5W 20) since they permit these low viscosities without contributing excessive volatility.

The more preferred lubricating oil composition includes zinc dihydrocarbyldithiophosphate (ZDDP) in combination with the present additives. Both zinc dialkyldithiophosphates and zinc dialkaryldithiophosphates as well as mixed alkyl-aryl ZDDP are useful. A typical alkyl-type ZDDP contains a mixture of isobutyl and isoamyl groups. Zinc di-(nonylphenyl)dithiophosphate is a typical aryl-type ZDDP. Good results are achieved using sufficient ZDDP to provide 0.01-0.5 weight percent zinc. A preferred concentration supplies 0.05-0.3 weight percent zinc.

Another additive used in the oil compositions are the alkaline earth metal petroleum sulfonates or alkaline earth metal alkaryl sulfonates. Examples of these are calcium petroleum sulfonates, magnesium petroleum sulfonates, barium alkaryl sulfonates, calcium alkaryl sulfonates or magnesium alkaryl sulfonates. Both the neutral and the overbased sulfonates having base numbers up to 400 can be beneficially used. These are used in an amount to provide 0.05-1.5 weight percent alkaline earth metal and more preferably 0.1-1.0 weight percent. In a most preferred embodiment the lubricating oil composition contains a calcium petroleum sulfonate or alkaryl (e.g. alkylbenzene) sulfonate.

Other viscosity index improvers can be included such as the polyalkylmethacrylate type or the ethylenepropylene copolymer type. Likewise, styrene-diene VI improvers or styrene-acrylate copolymers can be used. Alkaline earth metal salts of phosphosulfurized polyisobutylene are useful.

In addition to their utility in crankcase oils the succinimide dispersants boronated according to the present process are very useful in automatic transmission fluids and other functional fluids, especially fluids which are in contact with fluoroelastomer treated clutch plates used in heavy duty power transmission.

CLAIMS:

1. A process for boronating a hydrocarbyl-substituted succinimide or succinamide dispersant comprising adding a lower alcohol solution or slurry of a boronating agent to said dispersant and distilling said lower alcohol from the resultant reaction mixture.

2. A process as claimed in claim 1, in which said boronating agent is boric acid.

3. A process as claimed in claim 2, in which said boric acid is ortho-boric acid.

4. A process as claimed in any one of claims 1 to 3, in which said alcohol is methanol.

5. A process as claimed in any one of claims 1 to 4, in which said dispersant has a succinimide portion derived from a polyalkyleneamine having the formula

$$H_2N \leftarrow R - NH \rightarrow_n H$$

wherein R is a divalent aliphatic hydrocarbon group having 2-4 carbon atoms and n is an integer from 1-10 including mixtures of said polyalkyleneamines.

6. A process as claimed in claim 5, in which said polyalkyleneamine is a polyethyleneamine containing 2-6 ethyleneamine units.

7. A process as claimed in any one of claims 1 to 6, in which said dispersant is an olefin polymer substituted succinimide wherein said olefin polymer substituent has an average molecular weight of 500-500,000.

8. A process as claimed in claim 7, in which said olefin polymer substituent is a polyisobutene substituent having an average molecular weight of 700-5000.

9. A substantially haze-free boronated succinimide or succinamide dispersant having a boron content of 0.1-2.0 weight percent boron, an NTU value of 20 or lower and which is compatible with fluoroelastomers as measured by the Caterpillar Oil Test Number TO-3.

10. A functional fluid, e.g. lubricating oil, composition comprising a major amount of a functional fluid, e.g. an oil of lubricating viscosity, and a minor amount of a boronated succinimide or succinamide dispersant as claimed in claim 9.